(19) Europäisches Patentamt
European Patent Office
Office européen des brevets

(11) **EP 4 729 919 A1**

(12) **DEMANDE DE BREVET EUROPEEN**

(43) Date de publication:
**22.04.2026 Bulletin 2026/17**

(21) Numéro de dépôt: **25208727.5**

(22) Date de dépôt: **15.10.2025**

(51) Classification Internationale des Brevets (IPC):
**G01N 9/00** *(2006.01)*    **G01N 11/16** *(2006.01)*
**G01N 11/00** *(2006.01)*    **G01N 21/41** *(2006.01)*
**G01N 29/12** *(2006.01)*    **G01V 3/12** *(2006.01)*
**G01V 7/00** *(2006.01)*    **G02B 6/12** *(2006.01)*

(52) Classification Coopérative des Brevets (CPC):
**G01N 11/16; G01N 9/002; G01N 21/4133;
G01N 29/036; G01N 29/2418; G01V 8/00;
G02B 6/12004;** G01N 2011/008; G01N 2291/02818

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **16.10.2024 FR 2411242**

(71) Demandeurs:
• **Commissariat à l'Energie Atomique et aux Energies
Alternatives
75015 Paris (FR)**

• **Centre National de la Recherche Scientifique
(CNRS)
75016 Paris (FR)**
• **Université Paris Cité
75006 Paris (FR)**

(72) Inventeurs:
• **JOURDAN, Guillaume
38054 Grenoble Cedex 09 (FR)**
• **NESHATEH, Hamidreza
75006 Paris 6 (FR)**
• **FAVERO, Ivan
75012 Paris (FR)**

(74) Mandataire: **Regimbeau
20, rue de Chazelles
75847 Paris Cedex 17 (FR)**

(54) **DISPOSITIF ET PROCÉDÉ DE MESURE DE PROPRIÉTÉS D'UN FLUIDE**

(57)    L'invention concerne un dispositif de mesure d'au moins une propriété d'un fluide, comprenant :
- une cellule (1) adaptée pour recevoir un volume de fluide,
- un guide d'onde optique (2) comprenant une entrée (20) adaptée pour être couplée à une source lumineuse (3) de sorte à transmettre un signal optique (L) émis par la source lumineuse,
- un résonateur optomécanique (7) agencé dans la cellule (1) de sorte à présenter au moins une surface principale en contact avec le fluide, le résonateur comprenant un élément suspendu (70) agencé au voisinage du guide d'onde optique (2) de sorte à permettre un couplage évanescent entre le guide d'onde optique (2) et l'élément suspendu (70),
- une unité de mesure (5) agencée à une sortie (21) du guide d'onde optique (2) pour recevoir le signal optique de sortie, et
- une unité de traitement couplée à l'unité de mesure.

**FIGURE 1**

EP 4 729 919 A1

## Description

### Domaine technique

L'invention concerne un dispositif de mesure de propriétés d'un fluide, ainsi qu'un procédé de mesure mis en œuvre au moyen dudit dispositif.

### Etat de la technique

Il existe différentes techniques pour caractériser un fluide, basée sur différentes propriétés et différents moyens de mesure.

Ainsi, par exemple, il existe en laboratoire différents types de viscosimètres ou de rhéomètres pour mesurer la viscosité d'un fluide. Cependant, chaque appareil est optimisé pour un type de fluide déterminé, de sorte qu'il peut être nécessaire de disposer de différents appareils pour couvrir une large gamme de fluides.

Par ailleurs, ces dispositifs ne permettent de mesurer que la viscosité et d'autres dispositifs doivent donc être utilisés si l'on souhaite déterminer d'autres propriétés du fluide, telles que sa densité, son indice de réfraction ou sa conductivité thermique.

Enfin, les viscosimètres et rhéomètres de laboratoire sont destinés à recevoir des échantillons d'un volume relativement important.

Or, dans le domaine du diagnostic, des besoins importants sont associés à des tests de type « point of care », c'est-à-dire des tests réalisés à proximité du patient. Ces tests doivent pouvoir être mis en œuvre par du personnel non nécessairement formé en médecine de laboratoire et nécessitent par conséquent des dispositifs peu encombrants et simples d'utilisation.

Les appareils de laboratoire ne sont pas adaptés à ce type d'utilisation.

Il existe donc un besoin pour un dispositif de mesure adapté pour de petits échantillons de fluide et apte à déterminer différentes propriétés de celui-ci.

### Résumé de l'invention

L'invention a pour but de remédier aux problèmes précités et de proposer un dispositif de mesure capable d'analyser des échantillons à l'échelle de quelques microlitres avec une grande précision tout en étant capables de déterminer plusieurs propriétés différentes du fluide.

A cet effet, un premier objet de l'invention est un dispositif de mesure de propriétés d'un fluide, comprenant :

- une cellule adaptée pour recevoir un volume de fluide,
- un guide d'onde optique comprenant une entrée adaptée pour être couplée à une source lumineuse de sorte à transmettre un signal optique émis par la source lumineuse,
- un résonateur optomécanique agencé dans la cellule de sorte à présenter au moins une surface principale en contact avec le fluide, le résonateur comprenant un élément suspendu agencé au voisinage du guide d'onde optique de sorte à permettre un couplage évanescent entre le guide d'onde optique et l'élément suspendu,
- une unité de mesure agencée à une sortie du guide d'onde optique pour recevoir le signal optique de sortie, comprenant :
- une première unité de détection configurée pour mesurer une composante basse fréquence du signal de sortie, et
- une seconde unité de détection pour mesurer une composante radiofréquence du signal de sortie, et
- une unité de traitement couplée à l'unité de mesure et configurée pour :
- à partir des données de mesure de la première unité de détection, déterminer une première propriété du fluide parmi un indice de réfraction et/ou une conductivité thermique du fluide, et
- à partir des données de mesure de la seconde unité de détection, déterminer une deuxième propriété du fluide parmi une viscosité, une densité et une compressibilité du fluide.

Selon d'autres caractéristiques avantageuses de l'invention, prises indépendamment ou combinées lorsque cela est techniquement possible :

- l'élément suspendu est un disque ou un anneau solidaire d'un substrat définissant une face de la cellule par un pied central ;
- l'élément suspendu présente une forme oblongue et est solidaire d'un substrat définissant une face de la cellule par deux pieds ;
- l'élément suspendu est une poutre nanostructurée solidaire par ses deux extrémités d'un substrat définissant deux faces de la cellule ;
- l'élément suspendu est en un cristal optomécanique, notamment en silicium ;
- la cellule présente un volume inférieur à 1 microlitre, de préférence inférieure à 1 nanolitre ;
- la cellule présente au moins une dimension inférieure à 1 mm, de préférence inférieure à 200 $\mu$m ;
- la cellule est fermée ;
- la cellule est un canal microfluidique s'étendant entre un orifice d'entrée et un orifice de sortie de fluide ;
- le dispositif comprend en outre au moins un dispositif d'actionnement adapté pour faire vibrer l'élément suspendu ;
- le dispositif comprend en outre un moyen de contrôle de la température du fluide dans la cellule.

Un autre objet de l'invention est un procédé de mesure de propriétés d'un fluide au moyen du dispositif décrit ci-dessus. Ledit procédé comprend :

- la mise en place du fluide dans la cellule dudit dispositif,
- la transmission d'un signal optique émis par la source lumineuse par le guide d'onde optique,
- l'excitation d'au moins un mode optique du résonateur optomécanique par le couplage évanescent de l'élément suspendu et du guide d'onde optique,
- la mise en oscillation de l'élément suspendu selon au moins un mode de résonance mécanique, ladite oscillation affectant le signal transmis par le guide d'onde optique par le couplage évanescent,
- la mesure, par la première unité de détection, d'une composante basse fréquence du signal de sortie,
- la mesure, par la seconde unité de détection, d'une composante radiofréquence du signal de sortie,
- à partir des données de mesure de la première unité de détection, la détermination d'une première propriété du fluide parmi un indice de réfraction et une conductivité thermique du fluide,
- à partir des données de mesure de la seconde unité de détection, la détermination d'une deuxième propriété parmi une viscosité, une densité et une compressibilité du fluide.

Selon d'autres caractéristiques avantageuses de l'invention, prises seules ou en combinaison lorsque cela est techniquement possible :

- le fluide est statique dans la cellule ;
- le fluide est en écoulement dans le canal microfluidique ;
- le procédé comprend un balayage en puissance de la source lumineuse ;
- le procédé comprend un balayage en longueur d'onde de la source lumineuse ;
- le dispositif d'actionnement est activé pour mettre en vibration l'élément suspendu, et l'unité de détection mesure une fréquence de résonance de l'élément suspendu ;
- l'élément suspendu est activé en vibration par le bruit thermomécanique généré par les molécules du fluide, et le dispositif de détection mesure une fréquence de résonance de l'élément suspendu ;
- le procédé comprend la transmission simultanée, par le guide d'onde optique, de deux faisceaux lumineux de longueurs d'onde différentes, chaque longueur d'onde étant associée à la mesure d'une composante basse fréquence, respectivement radiofréquence, du signal de sortie, et la mesure simultanée desdites composantes par la première et la seconde unité de détection.

**Brève description des figures**

D'autres caractéristiques et avantages de l'invention ressortiront de la description détaillée qui va suivre, en référence aux dessins annexés, sur lesquels :

- la figure 1 est un schéma de principe du dispositif de mesure ;
- la figure 2 est un schéma du guide d'onde et du résonateur optomécanique ;
- la figure 3 est une vue partielle du guide d'onde et du résonateur optomécanique permettant un couplage évanescent de la lumière circulant dans le guide d'onde ;
- la figure 4A, la figure 4B, la figure 4C, la figure 4D et la figure 4E illustrent différents modes de réalisation du résonateur optomécanique ;
- la figure 5 est une image au microscope électronique à balayage d'un dispositif d'actionnement électrostatique du résonateur optomécanique ;
- la figure 6 est un logigramme schématisant le protocole de mesure ;
- la figure 7 est un exemple de réponse thermo optique d'un résonateur optomécanique selon un mode de réalisation de l'invention ; la figure donne le taux de transmission optique en fonction de la longueur d'onde pour une puissance d'entrée croissante.

Pour des raisons de lisibilité des figures, les différents éléments ne sont pas nécessairement réalisés à l'échelle. Des éléments identiques ou remplissant la même fonction sont désignés d'une figure à l'autre par un même signe de référence et ne sont pas décrits entièrement à chaque fois.

**Description détaillée de modes de réalisation**

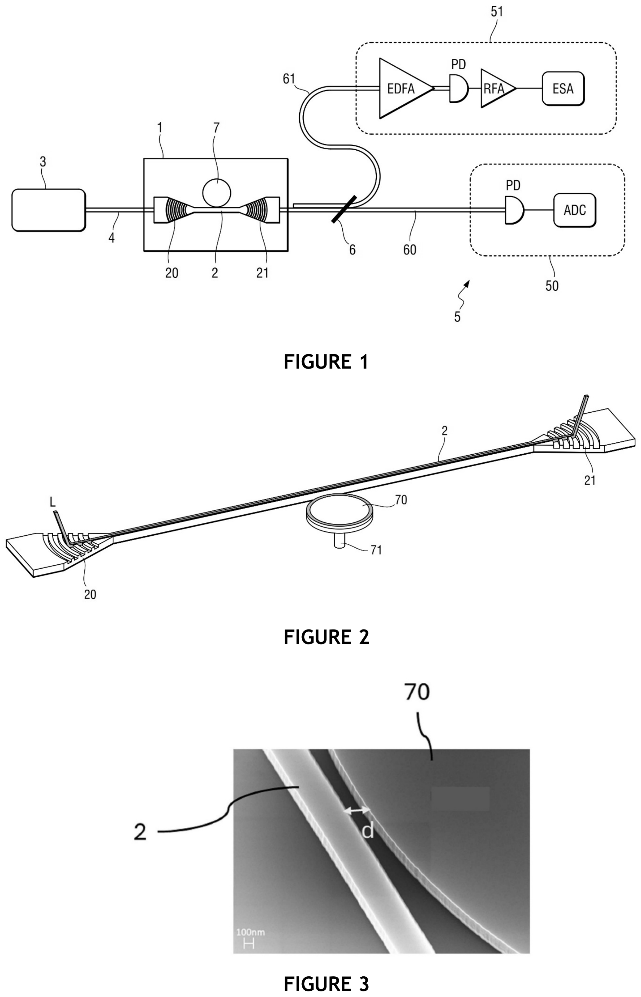

La figure 1 est un schéma de principe du dispositif de mesure selon l'invention.

Le dispositif comprend une cellule 1 destinée à recevoir un échantillon de fluide. De préférence, la cellule est de type microfluidique, c'est-à-dire que la cellule présente au moins une dimension inférieure à 1 mm, de préférence inférieure à 200 $\mu$m. De manière avantageuse, le volume intérieur de la cellule est inférieur à 1 microlitre, de préférence inférieur à 1 nanolitre. Cependant, pour certaines applications, le dispositif peut être utilisé avec un volume de fluide plus important.

Dans certains modes de réalisation, la cellule est fermée, l'échantillon étant statique dans la cellule. L'échantillon peut être introduit dans la cellule au moyen d'un dispositif externe, par exemple une seringue.

Dans d'autres modes de réalisation, la cellule se présente sous la forme d'un canal dans lequel l'échantillon s'écoule. Le canal s'étend entre un orifice d'entrée de l'échantillon et un orifice de sortie de l'échantillon. Le déplacement de l'échantillon entre l'entrée et la sortie peut être provoqué, par exemple, par une pompe ou tout autre dispositif approprié.

Le fluide peut être un liquide ou un gaz.

Parmi les liquides d'intérêt, on peut citer les fluides biologiques, notamment le plasma sanguin, mais aussi les polymères, les encres ou les électrolytes employés dans des batteries. Le fluide peut être constitué d'un matériau à l'état liquide lors de la mesure mais qui se solidifie ultérieurement.

Parmi les gaz d'intérêt, on peut citer les gaz d'hydrocarbures, tels que le méthane.

La cellule est avantageusement formée dans ou sur une puce. Les parois de la cellule peuvent être en particulier gravées dans un substrat de silicium ou un autre substrat utilisé en microélectronique ou en biologie, tel qu'un polymère ou une céramique.

La cellule peut comprendre des moyens (non illustrés) de contrôle de la température du fluide, pour maintenir le fluide à une température déterminée et/ou faire varier la température du fluide de manière contrôlée. Ces moyens peuvent se présenter par exemple sous la forme d'un élément Peltier agencé au contact d'une face de la cellule. De manière complémentaire ou alternative, ces moyens peuvent se présenter sous la forme d'un micro-chauffeur (« micro heater » en anglais) qui s'apparente à une résistance électrique dont la dimension est de quelques dizaines à quelques centaines de micromètres. De tels micro chauffeurs sont couramment utilisés dans le domaine de la photonique sur silicium. Enfin, comme mentionné plus bas, on peut chauffer localement le fluide par l'intermédiaire du résonateur optomécanique agencé dans la cellule, en injectant un faisceau optique de puissance adaptée dans celui-ci.

Le dispositif comprend par ailleurs un guide d'onde optique 2 s'étendant entre une entrée 20 et une sortie 21. L'entrée du guide d'onde optique est couplée à une source lumineuse 3, telle qu'un laser, permettant d'injecter un signal optique dans le guide d'onde optique.

La liaison entre la source lumineuse et le guide d'onde peut être réalisée par une fibre optique 4 ou tout autre moyen de liaison optique adapté.

La sortie du guide d'onde est couplée à une unité de mesure 5 qui sera décrite en détail plus bas. La liaison entre le guide d'onde et l'unité de mesure peut être réalisée par une fibre optique 60, 61 ou tout autre moyen de liaison optique adapté.

Le dispositif comprend un résonateur optomécanique agencé dans la cellule de sorte qu'au moins une de ses faces principales soit en contact avec le fluide. Par résonateur optomécanique, on comprend que le résonateur présente au moins un mode optique, c'est-à-dire un mode de confinement d'un faisceau lumineux incident, et un mode mécanique, c'est-à-dire un mode de vibration dans un état de résonance. Le confinement d'un faisceau lumineux peut se faire typiquement au niveau d'un gradient d'indice de réfraction dans le résonateur. Une telle différence d'indice de réfraction peut être obtenue par l'utilisation de deux matériaux différents au sein du résonateur (par exemple une alternance de régions en silicium et de régions en nitrure de silicium), en imposant une différence de concentration en impuretés entre deux régions du résonateur (par exemple dans le cas de l'oxyde de silicium), ou à l'interface entre le résonateur et un autre milieu, par exemple le fluide ambiant. La géométrie et le matériau du résonateur optomécanique peuvent ainsi être choisis pour obtenir les modes optiques et mécaniques souhaités.

De manière particulièrement avantageuse, le résonateur optomécanique est de dimension micrométrique, c'est-à-dire qu'il est apte à être inséré dans une cellule microfluidique. Ainsi, le résonateur optomécanique présente au moins une dimension inférieure à 1 mm, de préférence inférieure à 100 $\mu$m.

La figure 2 est un schéma en perspective du guide d'onde et du résonateur optomécanique. Les parois de la cellule et la source lumineuse ne sont pas représentées sur ce schéma.

Le guide d'onde 2 comprend un corps principal allongé, de section rectangulaire. L'entrée 20 présente une forme évasée qui se rétrécit vers la jonction avec le corps principal ; inversement, la sortie 21 présente une forme évasée qui s'élargit depuis la jonction avec le corps principal. L'entrée et la sortie présentent des réseaux de diffraction (« grating couplers » en anglais) dont la fonction est de coupler le faisceau optique L incident, respectivement sortant, hors du plan du guide d'onde, avec le guide d'onde s'étendant dans un plan. En pratique, les fibres optiques amenant et récupérant le faisceau optique sont positionnées avec une incidence quasi-normale par rapport au guide d'onde optique.

La source lumineuse (laser) est avantageusement accordable dans une gamme de longueurs d'onde déterminée. Par exemple, pour un guide d'onde en AsGa, les longueurs d'onde sont supérieures à 900 nm. Lorsque le guide d'onde est en silicium, les longueurs d'onde dans lesquelles travaille le dispositif sont comprises entre 1100 et 2000 nm et peuvent éventuellement aller jusqu'à 7000 nm. La large gamme de longueur d'onde possible permet de concevoir des dispositifs adaptés au fluide à étudier. En effet, on peut choisir une longueur d'onde qui soit dans une fenêtre de transparence du fluide ; au contraire, il peut être intéressant de se placer à proximité d'une longueur d'onde d'absorption pour le fluide pour disposer d'un moyen d'échauffement localisé ou obtenir une signature spectrale du fluide.

En pratique, le dispositif possède avantageusement une plage de fonctionnement large (les résonances optiques pouvant s'étendre dans une grande gamme de longueur d'onde supérieure à quelques centaines de nm), qui est principalement limitée par les réseaux de diffraction qui ont une largeur de bande de 20-30 nm, par exemple entre 1540 nm et 1570 nm.

Le guide d'onde optique est agencé au moins partiellement à l'intérieur de la cellule au voisinage du résonateur optomécanique. De préférence, l'entrée et la sortie du guide d'onde optique sont agencées à l'extérieur de la cellule, le guide d'onde optique traversant la paroi de la cellule de manière étanche au fluide. De manière alternative, le guide d'onde optique peut être agencé entièrement dans la cellule.

Le résonateur optomécanique 7 comprend un élément suspendu 70 (dans cette illustration, sous forme de disque) et un pied central 71 reliant l'élément suspendu à un support non représenté. Le support est par exemple le fond de la cellule, qui est parallèle au plan dans lequel s'étend l'élément suspendu, le pied central s'étendant depuis la face inférieure de l'élément suspendu. Dans d'autres formes d'exécution, le pied central peut s'étendre depuis la face supérieure de l'élément suspendu, ou encore à la fois depuis la face inférieure et la face supérieure de l'élément suspendu.

Dans certains modes de réalisation, le résonateur est immergé dans le fluide, de sorte que les deux faces principales opposées de l'élément suspendu soient en contact avec le fluide. Dans d'autres modes de réalisation, seule une face principale de l'élément suspendu est en contact avec le fluide.

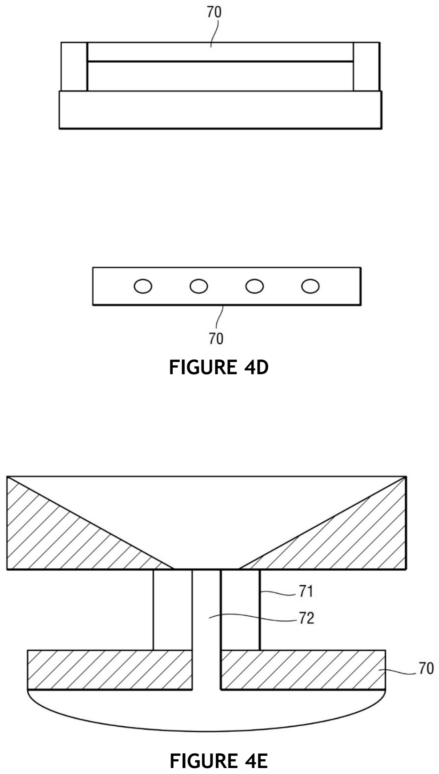

Le pied central peut être plein ou creux. Dans certains modes de réalisation (cf. figure 4E), un canal fluidique 72 est agencé dans le pied central 71 et traverse l'élément suspendu 70, ce qui permet d'amener le fluide en contact avec la face de l'élément suspendu opposée au pied central. Sur la figure 4E, la face en contact avec le fluide est la face inférieure de l'élément suspendu.

Dans le mode de réalisation illustré sur la figure 3, l'élément suspendu 70 s'étend dans le même plan que le guide d'onde optique 2. L'élément suspendu 70 présente donc au moins une face principale coplanaire avec une face principale du guide d'onde optique. Par face principale, on entend une face de l'élément suspendu présentant la plus grande surface.

Pour simplifier la fabrication de l'élément suspendu et du guide d'onde optique, l'élément suspendu et le guide d'onde optique présentent avantageusement la même épaisseur, leurs deux faces principales étant coplanaires. Cependant, dans d'autres formes d'exécution, l'élément suspendu peut être plus épais ou plus fin que le guide d'onde optique.

De manière alternative, le guide d'onde optique ne s'étend pas dans le même plan que l'élément suspendu mais peut être agencé au-dessus ou en-dessous de l'élément suspendu, parallèlement à celui-ci.

Dans tous les cas, l'élément suspendu 70 est agencé à une distance d du guide d'onde optique 2 qui est choisie suffisamment faible pour permettre un couplage évanescent de la lumière entre le guide d'onde optique et l'élément suspendu. La distance d peut dépendre de la longueur d'onde du signal optique. D'une manière générale, la distance d, qui est mesurée entre les points les plus proches du guide d'onde optique et de l'élément suspendu, est de l'ordre de 100 à 200 nm dans le domaine infrarouge (i.e. autour de 1500 nm).

De manière connue en elle-même, le couplage évanescent est basé sur l'existence d'une onde évanescente, qui est une onde dont l'amplitude diminue exponentiellement avec la distance au guide d'onde optique, et qui est générée par le passage du signal optique dans le guide d'onde optique. Un mode optique de l'élément suspendu présent dans le champ évanescent est donc excité par le signal optique circulant au travers du guide d'onde optique. Inversement, un photon du mode optique de l'élément suspendu peut pénétrer dans le guide d'onde optique et modifier le faisceau collecté à la sortie du guide d'onde optique.

A cet effet, l'élément suspendu et le guide d'onde optique sont constitués d'un matériau sensiblement transparent à un signal optique dans la gamme de longueur d'onde émis par la source lumineuse.

Le silicium est un matériau particulièrement avantageux pour son indice de réfraction optique dans la gamme de longueurs d'onde considérée et pour ses propriétés mécaniques. En outre, il peut être gravé par des techniques bien maîtrisées dans le domaine de la microélectronique. Cependant, d'autres matériaux peuvent être employés en substitution du silicium, par exemple l'arséniure de gallium (AsGa) ou le nitrure de silicium (SiN).

Le couplage évanescent peut être optimisé en ajustant notamment la largeur du guide d'onde optique et/ou la forme du guide d'onde optique dans la zone de couplage pour maximiser la longueur du guide qui est agencée à la distance d vis-à-vis de l'élément suspendu. Par exemple, dans le cas où l'élément suspendu est arrondi, le guide d'onde optique peut présenter une portion arrondie parallèle à l'élément suspendu pour augmenter l'effet de couplage évanescent.

L'élément suspendu est apte à être mis en oscillation par des moyens optiques, thermiques et/ou électrostatiques. L'oscillation se produit dans le plan de la surface principale de l'élément suspendu. Inversement, une oscillation de l'élément suspendu dans le plan de sa surface principale modifie le signal optique transmis par le guide d'onde optique et imprime son mouvement dans l'amplitude et/ou la phase du faisceau optique de sortie.

Le comportement de l'élément suspendu dépend du fluide avec lequel il est en contact.

L'actionnement peut être généré de manière déterministe (causée par exemple par un actionnement externe) ou aléatoire (causée par exemple par un bruit thermomécanique généré par le choc des molécules du fluide sur l'élément suspendu).

S'agissant des moyens d'actionnement optiques, l'excitation peut résulter d'un champ optique modulé en intensité présent dans l'élément suspendu, provenant du couplage évanescent avec le guide d'onde optique.

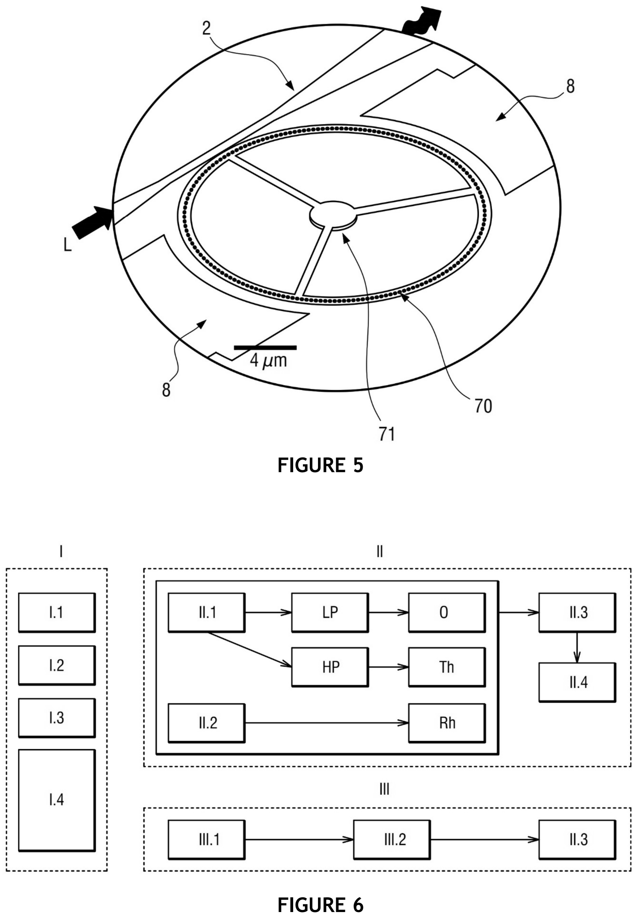

En référence à la figure 5, le dispositif peut comprendre un moyen d'actionnement électrostatique de l'élément suspendu. Ce moyen d'actionnement comprend une électrode 8 agencée dans le plan de l'élément suspendu. L'application d'une différence de potentiel entre l'élément suspendu et l'électrode génère une force capacitive qui déforme l'élément suspendu 70 (lequel présente une forme annulaire dans le mode de réalisation illustré).

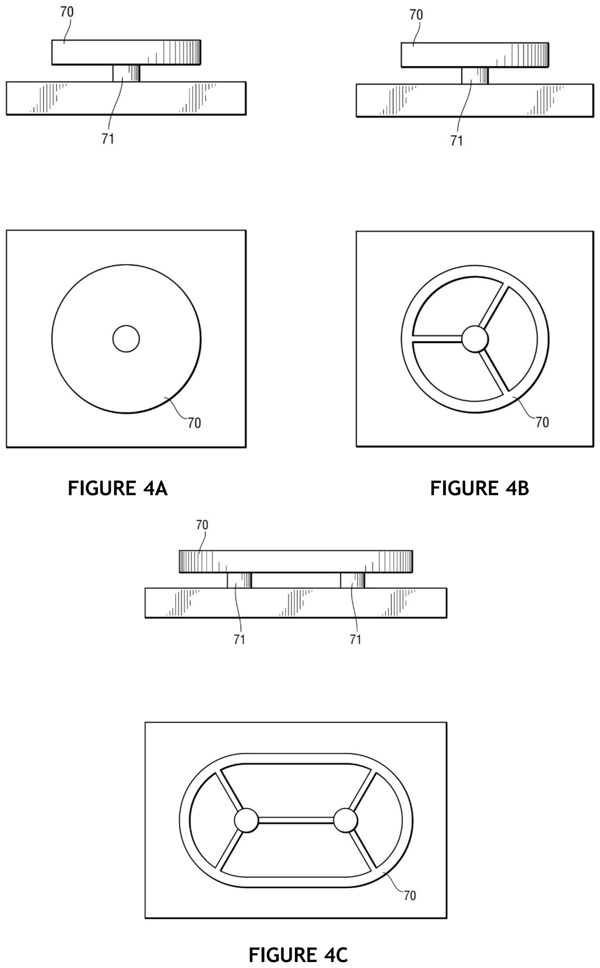

Les figures 4A à 4E illustrent, en vue de côté et en vue de dessus, différentes formes d'exécution du résonateur optomécanique.

Dans certains modes de réalisation, l'élément suspendu présente une forme circulaire (disque ou anneau) et est relié au support par un pied central.

La figure 4A illustre ainsi un élément suspendu 70 présentant une forme de disque et un pied central de section circulaire. Le diamètre du disque est typiquement de l'ordre de 2 à 60 $\mu$m, de préférence de l'ordre de 20 $\mu$m. Le diamètre du pied central est typiquement de l'ordre de 500 nm à 10 $\mu$m, de préférence de l'ordre de 1 $\mu$m.

La figure 4B illustre un élément suspendu 70 présentant une forme d'anneau et un pied central relié à l'anneau par des ponts radiaux.

Dans d'autres modes de réalisation, comme illustré sur la figure 4C, l'élément suspendu 70 présente une forme oblongue, constituée de deux arcs de cercle reliés par des segments rectilignes, et est relié au support par deux pieds 71 agencés au centre de chaque arc de cercle respectif.

Dans d'autres modes de réalisation, l'élément suspendu se présente sous la forme d'une poutre nanostructurée encastrée à ses deux extrémités dans le support, telle qu'illustrée sur la figure 4D. La nanostructuration est choisie pour permettre la génération de modes de vibration optiques et mécaniques localisés au sein de la poutre. Une telle nanostructuration comprend par exemple des motifs ovales connectés ou non par des motifs rectangulaires. La longueur de la poutre est typiquement de l'ordre de 5 à 100 $\mu$m, l'épaisseur de la poutre est de l'ordre de 100 à 500 nm et la largeur de la poutre est de l'ordre de 100 nm à 1 $\mu$m.

La figure 4E illustre un autre mode de réalisation dans lequel l'élément suspendu se présente sous la forme d'un disque, mais le disque et le pied central sont traversés de part en part par un canal microfluidique. Cette forme d'exécution est particulièrement avantageuse lorsqu'une seule face de l'élément suspendu doit être en contact avec le fluide. Dans ce cas, le canal microfluidique 72 permet d'injecter l'échantillon de fluide au travers du disque 70 pour le mettre en contact avec la face opposée au pied central 71.

Revenant à la figure 1, l'unité de mesure 5 comprend deux unités de détection.

Une première unité de détection 50 permet de mesurer une composante basse fréquence du signal de sortie.

Une seconde unité de détection 51 permet de mesurer une composante radiofréquence du signal de sortie.

A cet effet, le signal de sortie du guide d'onde optique est séparé par une lame séparatrice symétrique ou asymétrique 6. Une première partie du signal est conduite vers la première unité de détection 50 par une fibre optique 60 pour une analyse de la composante basse fréquence du signal et l'autre partie de signal optique est conduite vers la seconde unité de détection 51 par une fibre optique 61 pour une analyse de la composante radiofréquence du signal.

La première unité de détection 50 comprend un photodétecteur PD et un convertisseur analogique-numérique ADC agencé à la sortie du photodétecteur.

La seconde unité de détection 51 comprend successivement un amplificateur optique EDFA, un photodétecteur PD, un amplificateur radiofréquence RFA et un analyseur spectral ESA.

La figure 6 est un logigramme présentant le fonctionnement du dispositif de mesure.

Une première phase I préalable à la mesure vise à mettre en place et stabiliser les conditions opératoires : température ambiante (1.1), transmission optique (I.2), niveau de fluide dans la cellule microfluidique (I.3). Par ailleurs, des modèles de la réponse optique, thermique et mécanique du résonateur optomécanique en contact avec différents fluides sont enregistrés (1.4).

Une deuxième phase II de collecte des données est mise en œuvre grâce à l'unité de mesure.

Une première partie du signal optique est dirigée par la lame séparatrice vers la première unité de détection qui enregistre (II.1) la composante basse fréquence du signal optique. Celle-ci permet de mesurer, pour une faible puissance optique (LP) de la source lumineuse (typiquement inférieure à 10 µW), la réponse purement optique O du résonateur dans son régime linéaire. Cette réponse permet de déterminer l'indice de réfraction du fluide. Lorsque l'on augmente la puissance optique (HP typiquement, jusqu'à 200 µW ou au-delà), la réponse Th du résonateur est modifiée par un effet thermo-optique et permet de mesurer la conductivité thermique du fluide grâce à l'évaluation de la dissipation de chaleur au sein du fluide.

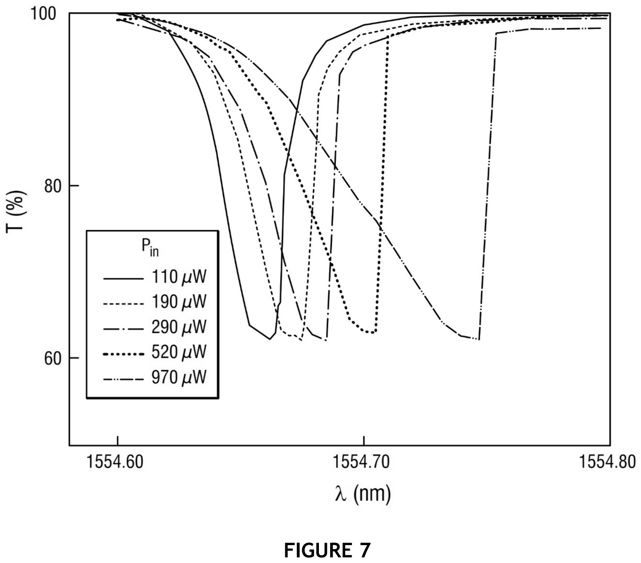

La figure 7 illustre cet effet thermo-optique sur la courbe de la transmission T (en %) en fonction de la longueur d'onde λ (en nm) lorsque le fluide est de l'eau. Au fur et à mesure que l'on augmente la puissance optique Pin entre 110 µW et 970 µW, on observe que le minimum de transmission (et la longueur d'onde de résonance optique) se décale vers les longueurs d'onde plus élevées. A basse puissance, l'échauffement de la structure a un impact négligeable sur la longueur d'onde de résonance et la réponse de la cellule s'apparente à une courbe lorentzienne. Pour des puissances plus élevées, l'échauffement de la cellule modifie la longueur d'onde de résonance. La quantité de lumière qui entre dans la cavité augmente avec la longueur d'onde de résonance qui se décale vers la droite au fur et à mesure que l'on balaie la longueur d'onde vers la droite également. La réponse thermo-optique est également caractérisée par l'existence d'un cycle d'hystérésis de la réponse en longueur d'onde lorsqu'on balaie la longueur d'onde vers le bas (non représenté sur cette figure).

En parallèle, la seconde partie du signal de sortie du guide d'onde optique est dirigée par la lame séparatrice vers la deuxième unité de détection apte à mesurer la composante RF (II.2). Celle-ci permet de mesurer la réponse mécanique du résonateur et d'en déduire la viscosité, la compressibilité et la densité du fluide.

L'ensemble de ces mesures est effectué de manière très rapide, typiquement en quelques secondes.

Les mesures sont d'abord effectuées sur un fluide de référence (II.3) puis, une fois le dispositif calibré, sur le fluide d'intérêt (II.4).

Dans le cas où l'on utilise un seul faisceau lumineux, la mesure basse fréquence et la mesure RF sont réalisées successivement. Chacune de ces mesures étant très rapide, cela ne nuit pas aux performances du dispositif.

Par ailleurs, il est possible de réaliser simultanément la mesure basse fréquence et la mesure radiofréquence par exemple en utilisant un multiplexage optique pour injecter deux faisceaux lumineux avec des longueurs d'onde différentes dans le guide d'onde optique. Chaque faisceau met en œuvre un mode optique différent de l'élément suspendu et est associé à la mesure de la composante basse fréquence, respectivement radiofréquence. En sortie du guide d'onde optique, on peut éventuellement utiliser un démultiplexage optique pour séparer les deux longueurs d'onde en amont des photodiodes.

Un autre cas d'utilisation de deux faisceaux lumineux concerne l'injection de puissance optique dans l'élément suspendu de sorte à le chauffer et ainsi chauffer le fluide environnant. Cette configuration peut permettre de chauffer très localement le fluide, en particulier dans le cas d'une cellule microfluidique de dimension micrométrique. On peut mettre en œuvre ce moyen de chauffage optique en utilisant un second laser dit de pompe dont le faisceau se superpose dans le guide d'onde optique à celui du laser mesure. On utilise des moyens de filtrage (ou démultiplexage) pour séparer les signaux optiques en sortie du guide d'onde optique si besoin.

Enfin, une troisième phase III de post-traitement est mise en œuvre. Ce post-traitement vise à comparer les modèles avec les mesures effectuées au préalable avec un fluide connu (typiquement de l'eau, ou un mélange d'eau et de glycérol à différentes concentrations) (III .1), à actualiser ces modèles (III.2) et à utiliser les modèles ainsi calibrés pour déterminer l'indice de réfraction, la conductivité thermique, la densité, la viscosité et la compressibilité du fluide d'intérêt (III.3).

La réponse en fréquence d'un disque oscillant peut être modélisée par le système de formules suivantes :

$$\dot{a} + \left[ \frac{\kappa}{2} + j\left[ \Delta + g_{om}x + \frac{\omega_r}{n_{eff}} \frac{dn_{eff}}{dT} \Delta T \right] \right] a = \sqrt{\kappa_{ex} P_{bus}} \qquad (1)$$

$$k\nabla^2 T(r) + Q(r) = 0 \qquad (2)$$

$$m_r \ddot{x} + \gamma \dot{x} + \omega_s^2 x = \xi \qquad (3)$$

L'équation (1) régit l'évolution du champ optique dans la cellule.

L'équation (2) régit la propagation de la chaleur en fonction de la conductivité thermique k.

L'équation (3) est l'équation modifiée du mouvement du résonateur optomécanique.

a est le champ optique dans la cellule,

$P_{bus}$ est la puissance optique incidente dans le guide d'onde optique,

K est la décroissance du mode optique, égal à $K_{abs} + K_{rad} + K_{ex}$ où $K_{abs}$, $K_{rad}$, $K_{ex}$ sont respectivement les taux de perte par absorption, par diffusion et par échange,

$\Delta = \omega_L - \omega_C$ est le désaccord entre le laser et la cellule,

x est la position de l'élément suspendu,

$g_{om} = - d\omega_C / dx$ est le coefficient de couplage optomécanique,

T est la température,

$n_{eff}$ est l'indice de réfraction effectif du mode optique, qui dépend de l'indice de réfraction du disque et de l'indice de réfraction de son environnement,

$Q(r) = P_{abs} / V$ est la source de chaleur,

$P_{abs} = \kappa_{abs} |a|^2$ est la puissance optique absorbée dans l'élément suspendu en forme de disque de volume V,

$\xi$ est une force de Langevin aléatoire,

$\omega_s^2 = k_s/m_s$ est la fréquence de résonance angulaire,

$k_s$ est la constante élastique du mode de vibration,

$m_s$ est la masse associée,

et la masse relative $m_r$ et le taux d'amortissement $\gamma$ sont définis comme suit :

$$m_r = 1 + \frac{\sqrt{\frac{2\mu\rho}{\omega_s}}}{h\rho_s} + \frac{2\sqrt{\frac{2\mu\rho}{\omega_s}} + \rho h \left( \frac{1}{\pi} ln\left(\frac{32a}{h}\right) - \frac{1}{2} \int_0^{2ka} H_0(x)dx \right)}{a\rho_s \left( 1 - \frac{J_0(k_s a) J_2(k_s a)}{J_1^2(k_s a)} \right)} \qquad (4)$$

$$\gamma = \frac{\sqrt{2\mu\rho\omega_s}}{h\rho_s} + \frac{\sqrt{2\mu\rho\omega_s} + \frac{\omega_s \rho h}{2} \int_0^{2ka} J_0(x)dx}{a\rho_s \left( 1 - \frac{J_0(k_s a) J_2(k_s a)}{J_1^2(k_s a)} \right)} \qquad (5)$$

où $\mu$ est la viscosité

$\rho$ et $\rho s$ sont la densité du liquide et du solide,

k est le vecteur de propagation de l'onde dans le liquide, k étant égal à $\omega_s / c$ où c est la vitesse du son dans le liquide,

J0(x) et H0(x) sont les fonctions de Bessel et de Struve, respectivement.

Bien qu'un seul résonateur optomécanique soit illustré sur les figures présentées, différentes formes d'exécution du dispositif peuvent comprendre plusieurs résonateurs optomécaniques.

Ainsi, le dispositif peut comprendre au moins deux résonateurs optomécaniques dans une même cellule. Lesdits résonateurs peuvent être agencés au voisinage d'un même guide d'onde optique et ainsi procurer des mesures redondantes. De manière alternative, les résonateurs peuvent être agencés au voisinage de deux guides d'onde différents dans lesquels circulent des faisceaux lumineux différents, afin de réaliser simultanément des mesures différentes. Dans d'autres cas, les résonateurs peuvent être agencés au voisinage d'un même guide d'onde optique dans lequel circule, grâce à un multiplexage, deux faisceaux lumineux différents, afin d'exciter des modes optiques différents d'un résonateur à l'autre. Les résonateurs sont avantageusement identiques mais peuvent éventuellement être différents.

Dans d'autres formes d'exécution, le dispositif comprend plusieurs cellules, chaque cellule comprenant au moins un résonateur optomécanique. Chaque cellule peut comprendre un même fluide, ce qui permet de procurer des mesures redondantes ou de déterminer simultanément différentes propriétés du fluide. De manière alternative, chaque cellule comprend un fluide différent, de manière à effectuer des analyses simultanées sur plusieurs fluides différents.

## Exemples

Le dispositif a été testé avec du glycérol ($C_3H_8O_3$) comme fluide de référence.

Des essais ont ensuite été réalisés avec du décan-1-ol ($CH_3(CH_2)_8CH_2OH$), qui présente un comportement non Newtonien avec une viscosité dépendant de la fréquence dans le domaine des ultra-hautes fréquences (UHF).

**Revendications**

1.  Dispositif de mesure d'une première propriété et d'une deuxième propriété d'un fluide, comprenant :

    - une cellule (1) adaptée pour recevoir un volume de fluide,
    - un guide d'onde optique (2) comprenant une entrée (20) adaptée pour être couplée à une source lumineuse (3) de sorte à transmettre un signal optique (L) émis par la source lumineuse,
    - un résonateur optomécanique (7) agencé dans la cellule (1) de sorte à présenter au moins une surface principale en contact avec le fluide, le résonateur comprenant un élément suspendu (70) agencé au voisinage du guide d'onde optique (2) de sorte à permettre un couplage évanescent entre le guide d'onde optique (2) et l'élément suspendu (70),
    - une unité de mesure (5) agencée à une sortie (21) du guide d'onde optique (2) pour recevoir le signal optique de sortie, comprenant :

        - une première unité de détection (50) configurée pour mesurer une composante basse fréquence du signal de sortie, et
        - une seconde unité de détection (51) pour mesurer une composante radiofréquence du signal de sortie, et

    - une unité de traitement couplée à l'unité de mesure et configurée pour :

        - à partir des données de mesure de la première unité de détection, déterminer la première propriété du fluide parmi un indice de réfraction et une conductivité thermique du fluide, et
        - à partir des données de mesure de la seconde unité de détection, déterminer la deuxième propriété du fluide parmi une viscosité, une densité et une compressibilité du fluide.

2.  Dispositif selon la revendication 1, dans lequel l'élément suspendu (70) est un disque ou un anneau solidaire d'un substrat définissant une face de la cellule par un pied central (71).

3.  Dispositif selon la revendication 1, dans lequel l'élément suspendu (70) présente une forme oblongue et est solidaire d'un substrat définissant une face de la cellule par deux pieds (71).

4.  Dispositif selon la revendication 1, dans lequel l'élément suspendu (70) est une poutre nanostructurée solidaire par ses deux extrémités d'un substrat définissant deux faces de la cellule.

5.  Dispositif selon l'une des revendications 1 à 4, dans lequel l'élément suspendu (70) est en un cristal optomécanique, notamment en silicium.

6.  Dispositif selon l'une des revendications 1 à 5, dans lequel la cellule (1) présente un volume inférieur à 1 microlitre, de préférence inférieure à 1 nanolitre.

7.  Dispositif selon l'une des revendications 1 à 6, dans lequel la cellule (1) présente au moins une dimension inférieure à 1 mm, de préférence inférieure à 200 $\mu$m.

8.  Dispositif selon l'une des revendications 1 à 7, dans lequel la cellule (1) est fermée.

9.  Dispositif selon l'une des revendications 1 à 7, dans lequel la cellule (1) est un canal microfluidique s'étendant entre un orifice d'entrée et un orifice de sortie de fluide.

10. Dispositif selon l'une des revendications 1 à 9, comprenant en outre au moins un dispositif d'actionnement (8) adapté pour faire vibrer l'élément suspendu (70).

11. Dispositif selon l'une des revendications 1 à 10, comprenant en outre un moyen de contrôle de la température du fluide dans la cellule (1).

12. Procédé de mesure d'au moins une première propriété et une deuxième propriété d'un fluide, comprenant :

    - la mise en place du fluide dans la cellule (1) d'un dispositif selon l'une des revendications 1 à 11,
    - la transmission d'un signal optique (L) émis par la source lumineuse (3) par le guide d'onde optique (2),

- l'excitation d'au moins un mode optique du résonateur optomécanique (7) par le couplage évanescent de l'élément suspendu (70) et du guide d'onde optique (2),
- la mise en oscillation de l'élément suspendu (70) selon au moins un mode de résonance mécanique, ladite oscillation affectant le signal transmis par le guide d'onde optique (2) par le couplage évanescent,
- la mesure, par la première unité de détection (50), d'une composante basse fréquence du signal de sortie,
- la mesure, par la seconde unité de détection (51), d'une composante radiofréquence du signal de sortie,
- à partir des données de mesure de la première unité de détection, la détermination de la première propriété parmi un indice de réfraction et une conductivité thermique du fluide,
- à partir des données de mesure de la seconde unité de détection, la détermination de la deuxième propriété parmi une viscosité, une densité et une compressibilité du fluide.

13. Procédé selon la revendication 12 dans sa relation de dépendance vis-à-vis de la revendication 8, dans lequel le fluide est statique dans la cellule (1).

14. Procédé selon la revendication 12 dans sa relation de dépendance vis-à-vis de la revendication 9, dans lequel le fluide est en écoulement dans le canal microfluidique.

15. Procédé selon l'une des revendications 12 à 14, comprenant un balayage en puissance de la source lumineuse.

16. Procédé selon l'une des revendications 12 à 14, comprenant un balayage en longueur d'onde de la source lumineuse.

17. Procédé selon l'une des revendications 12 à 16 dans sa relation de dépendance vis-à-vis de la revendication 10, dans lequel le dispositif d'actionnement est activé pour mettre en vibration l'élément suspendu (70), et dans lequel l'unité de détection mesure une fréquence de résonance de l'élément suspendu.

18. Procédé selon l'une des revendications 12 à 16, dans lequel l'élément suspendu est activé en vibration par le bruit thermomécanique généré par les molécules du fluide, et dans lequel le dispositif de détection mesure une fréquence de résonance de l'élément suspendu.

19. Procédé selon l'une des revendications 12 à 18, comprenant la transmission simultanée, par le guide d'onde optique, de deux faisceaux lumineux de longueurs d'onde différentes, chaque longueur d'onde étant associée à la mesure d'une composante basse fréquence, respectivement radiofréquence, du signal de sortie, et la mesure simultanée desdites composantes par la première et la seconde unité de détection.

**FIGURE 1**

**FIGURE 2**

**FIGURE 3**

**FIGURE 4A**

**FIGURE 4B**

**FIGURE 4C**

70

70

**FIGURE 4D**

71

72

70

**FIGURE 4E**

**FIGURE 5**

**FIGURE 6**

**FIGURE 7**

Europäisches
Patentamt

European
Patent Office

Office européen
des brevets

**RAPPORT DE RECHERCHE EUROPEENNE**

Numéro de la demande

EP 25 20 8727

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/089881 A1 (BAHL GAURAV [US] ET AL) 30 mars 2017 (2017-03-30) * alinéas [0022] - [0045]; figures 1-12 * ----- | 1-19 | INV. G01N9/00 G01N11/16 G01N11/00 |
| X | US 2022/411257 A1 (JOURDAN GUILLAUME [FR] ET AL) 29 décembre 2022 (2022-12-29) * alinéas [0005] - [0186]; figure 5 * ----- | 1-19 | G01N21/41 G01N29/12 G01V3/12 G01V7/00 |
| X | US 2013/119994 A1 (CSUTAK SEBASTIAN [US]) 16 mai 2013 (2013-05-16) * alinéas [0003] - [0046]; figure 3 * ----- | 1-19 | G02B6/12 |
| Y | WO 2023/111452 A1 (COMMISSARIAT ENERGIE ATOMIQUE [FR]) 22 juin 2023 (2023-06-22) * revendication 5; figure 6 * ----- | 2-4 | |
| Y | US 2022/334314 A1 (HENTZ SÉBASTIEN [FR] ET AL) 20 octobre 2022 (2022-10-20) * alinéa [0081]; figure 2 * ----- | 2-4 | |
| Y | US 2015/107357 A1 (HENTZ SÉBASTIEN [FR] ET AL) 23 avril 2015 (2015-04-23) * alinéa [0052]; figure 3 * ----- | 2-4 | **DOMAINES TECHNIQUES RECHERCHES (IPC)** |
| Y | US 2023/081434 A1 (HENTZ SEBASTIEN [FR] ET AL) 16 mars 2023 (2023-03-16) * alinéas [0050] - [0055]; figure 1 * ----- | 2-4 | G01N G01V G02B |
| A | US 2021/058033 A1 (DOLFI DANIEL [FR] ET AL) 25 février 2021 (2021-02-25) * le document en entier * ----- | 1-19 | |
| A | US 2017/314973 A1 (LEONCINO LUCA [FR] ET AL) 2 novembre 2017 (2017-11-02) * le document en entier * ----- | 1-19 | |
| A | US 2024/295482 A1 (CHU ZHIQIN [CN] ET AL) 5 septembre 2024 (2024-09-05) * le document en entier * ----- | 1-19 | |

Le présent rapport a été établi pour toutes les revendications

| Lieu de la recherche | Date d'achèvement de la recherche | Examinateur |
|---|---|---|
| La Haye | 21 janvier 2026 | Cantalapiedra, Igor |

## ANNEXE AU RAPPORT DE RECHERCHE EUROPEENNE
## RELATIF A LA DEMANDE DE BREVET EUROPEEN NO.

EP 25 20 8727

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-01-2026

| Document brevet cité au rapport de recherche | Date de publication | Membre(s) de la famille de brevet(s) | Date de publication |
|---|---|---|---|
| US 2017089881 A1 | 30-03-2017 | AUCUN | |
| US 2022411257 A1 | 29-12-2022 | EP 4109049 A1<br>FR 3124592 A1<br>US 2022411257 A1 | 28-12-2022<br>30-12-2022<br>29-12-2022 |
| US 2013119994 A1 | 16-05-2013 | AUCUN | |
| WO 2023111452 A1 | 22-06-2023 | EP 4448791 A1<br>FR 3130845 A1<br>US 2025122561 A1<br>WO 2023111452 A1 | 23-10-2024<br>23-06-2023<br>17-04-2025<br>22-06-2023 |
| US 2022334314 A1 | 20-10-2022 | EP 4089452 A1<br>FR 3121924 A1<br>US 2022334314 A1 | 16-11-2022<br>21-10-2022<br>20-10-2022 |
| US 2015107357 A1 | 23-04-2015 | CN 104579224 A<br>EP 2866000 A1<br>US 2015107357 A1 | 29-04-2015<br>29-04-2015<br>23-04-2015 |
| US 2023081434 A1 | 16-03-2023 | FR 3106005 A1<br>US 2023081434 A1<br>WO 2021140302 A1 | 09-07-2021<br>16-03-2023<br>15-07-2021 |
| US 2021058033 A1 | 25-02-2021 | CN 111684714 A<br>EP 3698465 A1<br>EP 3698466 A1<br>FR 3072512 A1<br>US 2021058033 A1<br>WO 2019076983 A1<br>WO 2019077005 A1 | 18-09-2020<br>26-08-2020<br>26-08-2020<br>19-04-2019<br>25-02-2021<br>25-04-2019<br>25-04-2019 |
| US 2017314973 A1 | 02-11-2017 | EP 3244169 A1<br>FR 3050820 A1<br>US 2017314973 A1 | 15-11-2017<br>03-11-2017<br>02-11-2017 |
| US 2024295482 A1 | 05-09-2024 | CN 118583820 A<br>EP 4425151 A1<br>US 2024295482 A1 | 03-09-2024<br>04-09-2024<br>05-09-2024 |

EPO FORM P0460

Pour tout renseignement concernant cette annexe : voir Journal Officiel de l'Office européen des brevets, No.12/82